# EUROPEAN PATENT APPLICATION

(11) **EP 2 320 312 A1**
(43) Date of publication of application: **11.05.2011**
(21) Application number: 09175524.9
(22) Date of filing: 10.11.2009
(51) Int. Cl.: G06F 3/048

(54) **Portable electronic device and method of controlling same**

(71) Applicant: RESEARCH IN MOTION LIMITED, Waterloo, Ontario N2L 3W8 (CA)
(72) Inventor: Lee, John Jong-Suk, Waterloo Ontario N2L 3L3 (CA); Bocking, Andrew Douglas, Waterloo Ontario N2L 5Z5 (CA); Griffin, Jason, Tyler, Waterloo Ontario N2L 3W8 (CA); Langlois, Michael, George, Kanata Ontario K2K 3K2 (CA); Mujkic, Alen, Mississauga Ontario L4W 0B5 (CA)
(74) Representative: Fennell, Gareth Charles

(57) **Abstract**

A method includes rendering an interface area for inputting a first plurality of characters associated with a plurality of locations on a touch-sensitive display of a portable electronic device, detecting, by the touch-sensitive display, a first gesture in a first direction on the touch-sensitive display, associating a second set of characters with the plurality of locations in response to detecting the gesture.

## Description

The present disclosure relates generally to a portable electronic device including a touch screen display and control of the electronic device.

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for input and output. The information displayed on the touch-sensitive displays may be modified depending on the functions and operations being performed. With continued demand for decreased size of portable electronic devices, touch-sensitive displays continue to decrease in size.

Improvements in electronic devices with touch-sensitive or touchscreen devices are desirable.

### GENERAL

A method may comprise rendering an interface area for inputting a first plurality of characters associated with a plurality of locations on a touch-sensitive display of a portable electronic device, detecting, by the touch-sensitive display, a first gesture in a first direction on the touch-sensitive display, associating a second set of characters with the plurality of locations in response to detecting the first gesture.

A computer-readable medium may have computer-readable code executable by at least one processor of a portable electronic device to perform the above method.

A portable electronic device may comprise a touch-sensitive display configured to render an interface area for inputting a first plurality of characters associated with a plurality of locations on the touch-sensitive display and to detect a first gesture in a first direction. The portable electronic device may also comprise a processor configured to associate a second set of characters with the plurality of locations when the first gesture is detected.

### BRIEF DESCRIPTION OF THE DRAWINGS

FIG. 1 is a block diagram of a portable electronic device in accordance with the present disclosure.

FIG. 2 is a flowchart illustrating a method of facilitating selection of a selectable feature displayed on a touch-sensitive display of a portable electronic device in accordance with the present disclosure.

FIG. 3 through FIG. 5 illustrate examples of a series of touches at a touch-sensitive display of a portable electronic device, in accordance with the present disclosure.

FIG. 6 illustrates an example of a series of touches at a touch-sensitive display of a portable electronic device, in accordance with the present disclosure.

FIG. 7 illustrates an example of a series of touches at a touch-sensitive display of a portable electronic device, in accordance with the present disclosure.

FIG. 8 illustrates an example of a series of touches at a touch-sensitive display of a portable electronic device, in accordance with the present disclosure.

### DESCRIPTION OF PREFERRED EMBODIMENTS

The following describes an apparatus for and method controlling a portable electronic device. An interface area is rendered for inputting a first plurality of characters associated with a plurality of locations on a touch-sensitive display of the portable electronic device. A first gesture in a first direction on the touch-sensitive display is detected and associating a second set of characters with the plurality of locations in response to detecting the gesture.

For simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail in order not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities such as a handheld electronic game device, digital photograph album, digital camera, or other device.

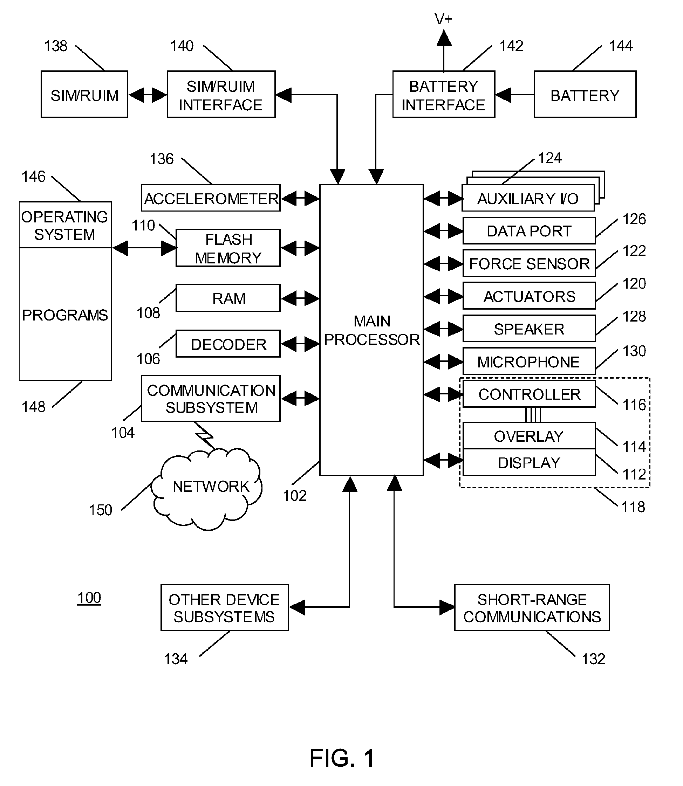

A block diagram of an example of an embodiment of a portable electronic device 100 is shown in FIG. 1. The portable electronic device 100 includes a number of components such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. The portable electronic device 100 is a battery-powered device and includes a battery interface 142 for receiving one or more rechargeable batteries 144.

The processor 102 also interacts with additional subsystems such as a Random Access Memory (RAM) 108, memory 110, a display 112 with a touch-sensitive overlay 114 connected to an electronic controller 116 that together comprise a touch-sensitive display 118, an actuator 120, a force sensor 122, an auxiliary input/output (I/O) subsystem 124, a data port 126, a speaker 128, a microphone 130, short-range communications 132 and other device subsystems 134. The processor 102 interacts with the touch-sensitive overlay 114 via the electronic controller 116. The processor 102 may also interact with an accelerometer 136 as shown in FIG. 1. The accelerometer 136 may include a cantilever beam with a proof mass and suitable deflection sensing circuitry. The accelerometer 136 may be utilized for detecting direction of gravitational forces or gravity-induced reaction forces.

To identify a subscriber for network access according to the present embodiment, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into memory 110.

The portable electronic device 100 also includes an operating system 146 and software components 148 that are executed by the processor 102 and are typically stored in a persistent, updatable store such as memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 is configured to display information such as characters or symbols, entered in an application, such as a web browser, contact list, email, calendar, spreadsheet, word processing, and so forth and to render an interface area for inputting characters, such as a keyboard that has a plurality of keys or buttons, each associated with one or more characters and/or functions. The characters include alphabetical characters, numerals, control characters, symbols and so forth.

The touch-sensitive display 118 is also configured to detect a gesture, also known as an interaction or input. A gesture is generally a type of touch on a touch-sensitive display 118 that begins at an origin point and continues contact to an ending point spaced from the origin point. A gesture may comprise, for example, a single swipe, also known as a flick, comprising one origin point and one end point, a double swipe, comprising two origin points and two end points, other multiple swipes, or may comprise multiple touch aspects, such as one or more swipes in combination with a touch, or other suitable touch events. Each gesture may be long or short in distance and/or duration. Two points of the gesture are utilized to determine a vector that describes a direction of the gesture. The direction may be referenced with respect to the touch-sensitive display 118, the orientation of the information displayed on the touch-sensitive display 118, or another reference. For the purposes of providing a reference, "horizontal" as utilized herein comprises a direction substantially parallel to a left-to-right or right-to-left scan, relative to the orientation of the displayed information, and "vertical" as utilized herein comprises a direction substantially parallel to a top-to-bottom scan (downward) or bottom-to-top scan (upward) relative to the orientation of the displayed information. The endpoints of the gesture may be utilized to determine the magnitude or distance of the gesture. The duration of the gesture may be determined from the endpoints of the swipe in time. The controller 116 and/or the processor 102 determine the direction, magnitude, and/or duration of the gesture.

The touch-sensitive display 118 is also configured to receive and detect a touch on the overlay 114. When a touch is detected, the location of the touch on the touch-sensitive display is determined. Each application typically includes at least one map of locations associated with selectable features displayed for the application. The map of locations includes a target area on the touch-sensitive display for each selectable feature, including each key of a keyboard, such that when a touch is detected and the location of the touch is determined to fall within the target area of one of the keys, the associated character or function is selected.

Shift, shift lock, and key association functions are performed, in response to detection of a gesture, to change the data input when a subsequent touch is detected on the keyboard. Fewer keys may be provided for the keyboard while still providing full keyboard functionality, thereby reducing space that the keyboard takes up on the touch-sensitive display 118 and providing greater space to display other information.

The following are examples of gestures and associated functions. When an upward gesture is detected, a shift function is engaged, thereby associating capital letters with locations on the keyboard to capitalize a letter selected by a subsequent touch on an associated target area of a key. When a double upward gesture is detected, a shift lock function is engaged to associate capital letters with locations on the keyboard until the shift lock is disengaged. When a downward gesture is detected, a shift lock off function is engaged to disengage the shift lock function and small letters are again associated with the locations on the keyboard. When a left to right gesture is detected the associated characters are changed. For example, when a single left to right gesture, such as a swipe, is detected, the default, or first, set of characters associated with locations on the touch-sensitive display 118 is no longer displayed and a second set of characters are displayed and associated with the locations on the touch-sensitive display 118. One of the second set of characters may be selected by a subsequent touch on a respective target area of a key. When a double left to right gesture, such as a double swipe, is detected, a second set of characters is displayed and associated with locations on the touch-sensitive display 118 until the second set lock is disengaged. Thus, the double gesture locks the second set of characters in association with the locations on the touch-sensitive display 118 as well as displaying the second set of characters. When a right to left gesture is detected, the second set of characters is no longer displayed, and the first set of characters is displayed and associated with the locations on the touch-sensitive display 118. When a second single left to right gesture is detected following the first single gesture and prior to another touch, a third set of characters is displayed and associated with the locations on the touch-sensitive display. When a double left to right gesture is detected, following a left-to-right gesture and prior to another touch, the third set of characters is locked in association with the locations on the touch-sensitive display. When a right to left gesture is detected, the first set of characters is displayed and associated with the locations on the touch-sensitive display 118, thereby unlocking the third set of characters associated with the locations on the touch-sensitive display 188. Different gesture-function associations than those described herein may be utilized than those described above without departing from the teachings of the disclosure.

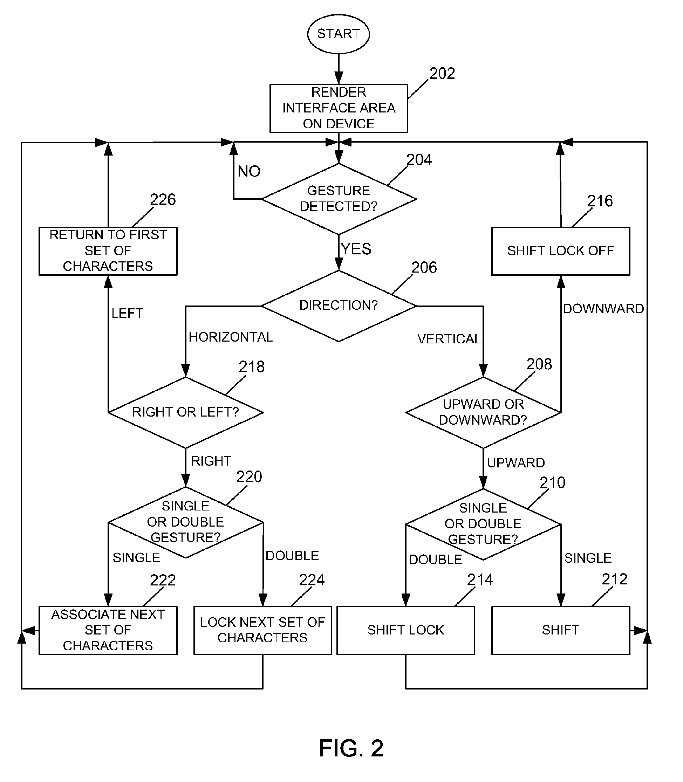

FIG. 2 is a flowchart illustrating a method of controlling an electronic device that has a touch-sensitive display 118. The flowchart is advantageously performed by the processor 102 performing stored instructions from a computer-readable medium. Coding of software for carrying out such a method is within the scope of a person of ordinary skill in the art given the present description. An interface area for inputting characters is rendered 202 on the touch-sensitive display 118 of the portable electronic device 100. The interface area may include, for example, a plurality of keys of a keyboard. When a gesture is detected 204, a direction of the gesture is determined 206 as described above. When a gesture occurs in a substantially vertical direction, a determination of the vertical direction (upward or downward) 208 is made. When an upward gesture is detected at 208, and the gesture is a single gesture, such as a single swipe at 210, the shift function is engaged 212. The process continues at 204. When the gesture is a double gesture at 210, the shift lock function is engaged 214 and the process continues at 204. When a downward gesture is detected, the shift lock function is disengaged 216. When the gesture occurs in a substantially horizontal direction, a determination of the horizontal direction (left to right or right to left) is made 218. When a left to right gesture is detected and the gesture is a single gesture at 220, a next set of characters is displayed and associated with the locations on the touch-sensitive display 118. When the gesture is a double gesture at 220, the set of characters the next set of characters are locked 224 on the keyboard. When a right to left gesture is detected, the set of characters are unlocked 226 and the default or first set of characters are displayed and associated with the locations on the touch-sensitive display.

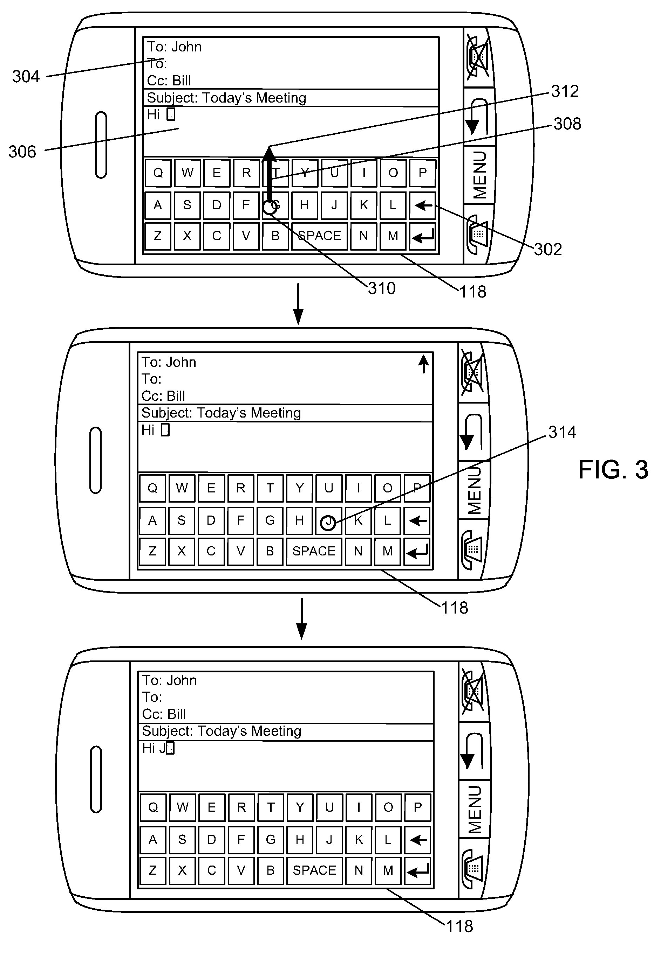

Examples of gestures on a touch-sensitive display 118 of a portable electronic device 100 are shown in FIG. 3 through FIG. 5. Each of FIG. 3 through FIG. 5 illustrates examples of a series of touches on a touch-sensitive display 118 of a portable electronic device 100. These examples utilize various swipes as the gestures. In this example, a set of keys 302 is rendered in a QWERTY layout in an electronic mail composition interface. Information including a header 304 and a body 306 of the electronic message being composed is shown above the keyboard 302. In FIG. 3, the body 306 of the electronic mail includes the text "Hi" as shown in the upper screen, and a single, upward swipe, including the origin point 310 and the ending point 312 is shown by the arrow 308 in the middle screen of FIG. 3. When this swipe is detected 204, the shift function is engaged 212. A visual indicator of the shift function may be provided. A touch 314 is shown at the "J" key, after the swipe is detected. The associated character is the capital letter "J" and the capital letter "J" is displayed on the touch-sensitive display 118, as shown in the lower screen. After the touch 314, the shift function is turned off.

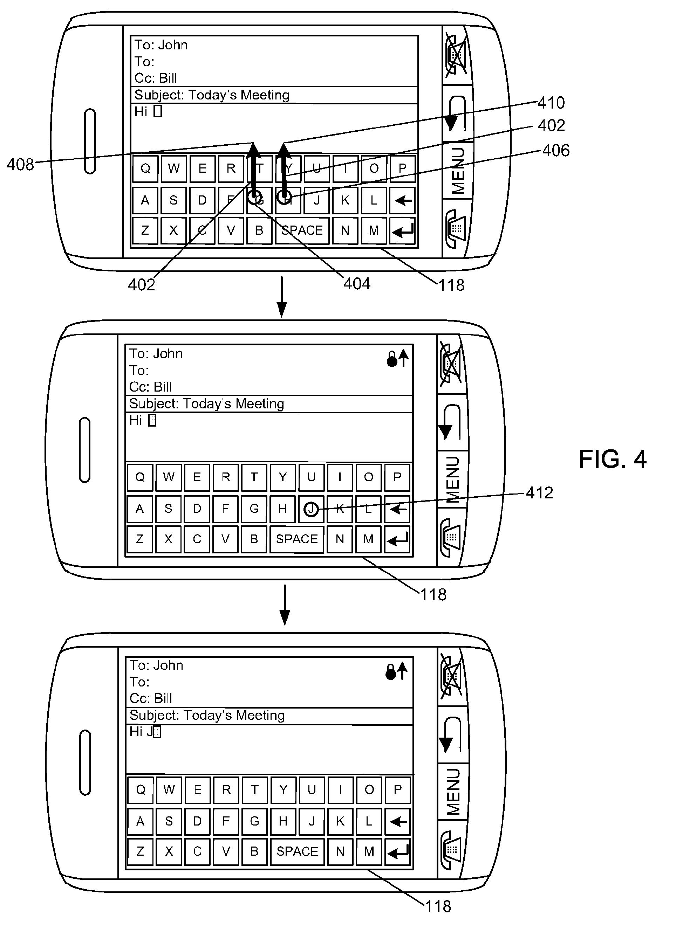

FIG. 4 illustrates an example of a series of touches on a touch-sensitive display of a portable electronic device. A body 306 of the electronic mail includes the text "Hi" and a double upward swipe, including the origin points 404, 406 and the ending points 408, 410, is shown by the arrows 402, in the upper screen of FIG. 4. When this swipe is detected 204, the shift lock function is engaged 214 and a visual indicator may be provided. A touch 412 is shown at the "J" key, after the swipe is detected, as shown in the middle screen. The capital letter "J" is associated with the touch location and is displayed on the touch-sensitive display 118, as shown in the lower screen. After the touch 412, the shift lock function remains on.

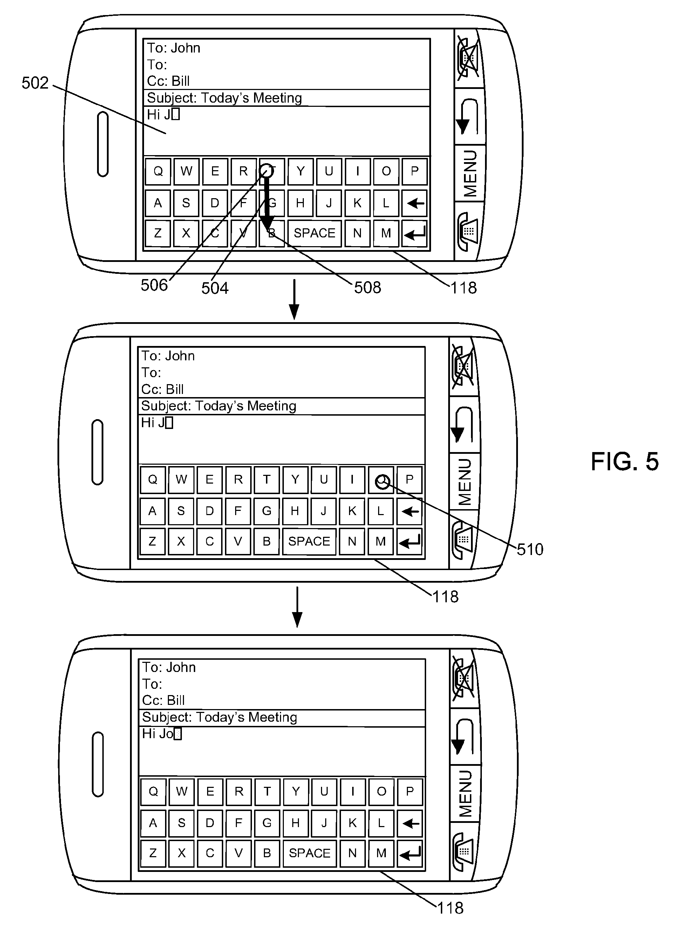

FIG. 5 illustrates an example of a series of touches on a touch-sensitive display of a portable electronic device. The body 502 of the electronic message includes the text "Hi J" and a single downward swipe including the origin point 506 and the ending point 508 is shown by the arrow 504, as shown in the upper screen of FIG. 5. When this swipe is detected 204, the shift lock function engaged as shown in FIG. 4, is disengaged 216. A touch 510 is shown in the middle screen, at the "O" key, after the swipe is detected.. The small letter "o" is associated with the touch location and is displayed on the touch-sensitive display 118, as shown in the lower screen.

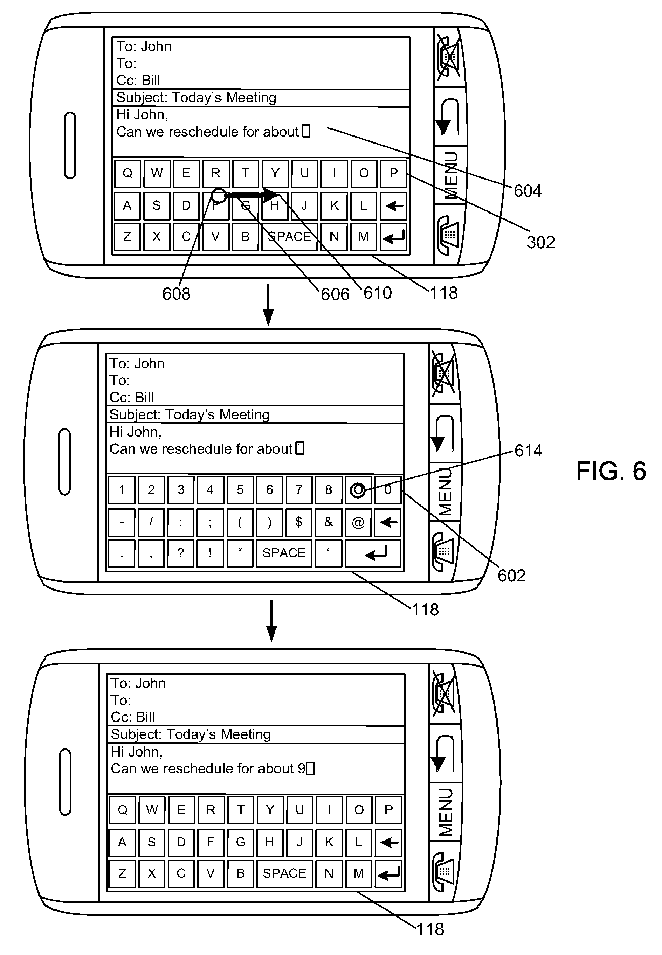

Other examples of gestures on a touch-sensitive display 118 of a portable electronic device 100 are shown in FIG. 6 through FIG. 8. These examples utilize various swipes as the gestures. FIG. 6 illustrates an example of a series of touches on a touch-sensitive display of a portable electronic device. The body 604 of the electronic mail includes the text "Hi John, Can we reschedule for about" and a single, left-to-right swipe, including the origin point 608 and the ending point 610, is shown by the arrow 606 in the upper screen of FIG. 6. When this left-to-right swipe is detected 204, the set of characters associated with the locations of the keys 302, which in this example are alphabetical letters arranged in the QWERTY keyboard layout, are associated with the locations of the keys 302 and are no longer displayed. A set of numeric and symbolic characters are displayed and associated 222 with the locations of the keys 602. A touch 614 is shown in the middle screen at a touch location on the touch-sensitive display 118. The number "9" is associated with the touch location and is displayed on the touch-sensitive display 118, as shown in the lower screen. After the touch 614, the set of numeric and symbolic characters associated with the locations of the keys 602 are no longer displayed and are no longer associated with the locations of the keys 602. The set of alphabetical characters are displayed and associated 222 with the locations of the keys 302.

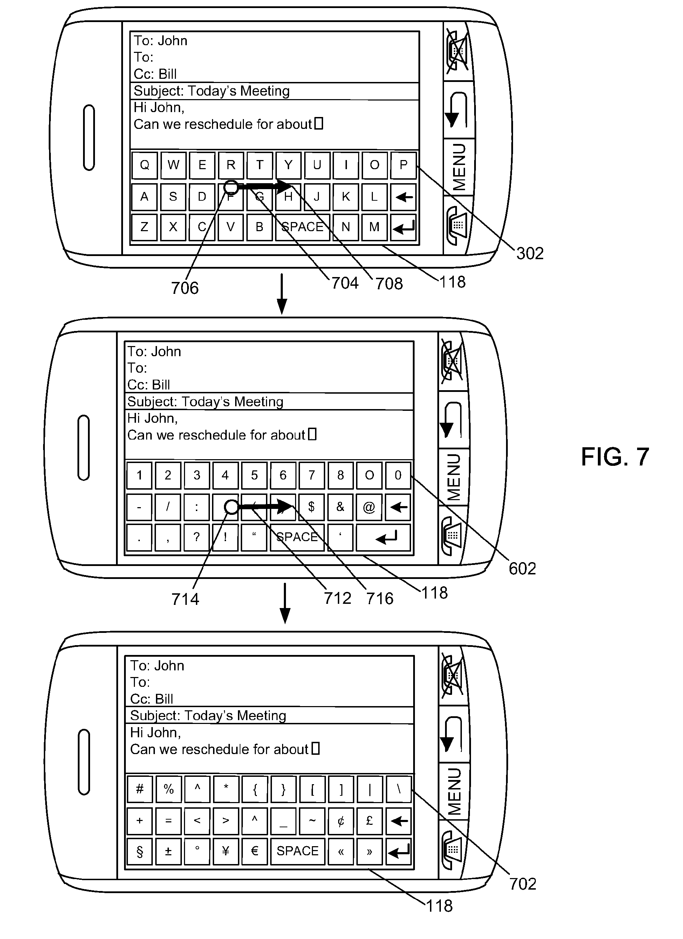

FIG. 7 illustrates an example of a series of touches on a touch-sensitive display of a portable electronic device. In this example, a set of alphabetical characters are associated with the locations of the keys 302 in an electronic mail composition interface, and a single left-to-right swipe, including the origin point 706 and the ending point 708 shown by the arrow 704 in the upper screen of FIG. 7, is detected. When this left-to-right swipe is detected 204, the set of alphabetical characters associated with the locations of the keys 302 are no longer displayed and a set of numeric and symbolic characters are displayed and associated 222 with the locations of the keys 602. A single left-to-right swipe, including the origin point 714 and the ending point 716 shown by the arrow 712, is detected when the set of numeric and symbolic characters is displayed and associated with the locations of the keys 602, as shown in the middle screen. When this left-to-right swipe is detected 204, the set of numeric and symbolic characters associated with the locations of the keys 602 are no longer displayed and are no longer associated with the locations of the keys 602. Instead, a further set of symbolic characters is displayed and associated 222 with the location of the keys 702, as shown in the lower screen. A touch at the location of one of the keys 702 of the keyboard results in selection and display of a character associated with the touch location. After the touch, the set of symbolic characters associated with the locations of the keys 702 is no longer displayed and the alphabetical characters are displayed and associated with the locations of the keys 302.

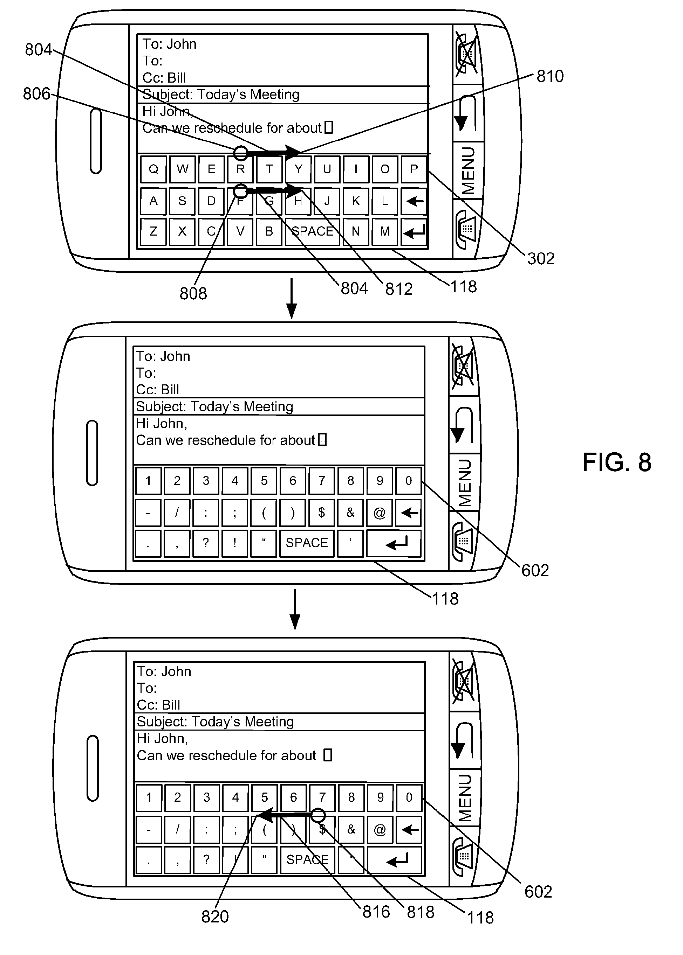

FIG. 8 illustrates an example of a series of touches on a touch-sensitive display of a portable electronic device. In this example, a set of alphabetical characters are displayed and associated with locations of the keys 302 in an electronic mail composition interface. A double left-to-right swipe, including the origin points 806, 808 and the ending points 810, 812, shown by the arrows 804 in the upper screen of FIG. 8, is detected. When this double left-to-right swipe is detected 204, the set of alphabetical characters associated with the locations of the keys 302 are not longer displayed and are no longer associated with the locations of the keys 302. A set of numeric and symbolic characters are displayed and associated 222 with the locations of the keys 602, as shown in the middle screen, and the set of numeric and symbolic characters associated with the locations of the keys 602 are locked 224 on the keyboard., After a touch at a location is associated with one of the set of keys 602, causing selection and display of the associated character, the set of numeric and symbolic characters remain displayed and associated with the locations of the keys 602. A single right-to-left swipe, including the origin points 818 and the ending point 820, shown by the arrow 816 in the lower screen of FIG. 8, is detected when the set of numeric and symbolic characters displayed and associated with the locations of the keys 602 are locked 224 on the keyboard. When this right-to-left swipe is detected 204, the set of numeric and symbolic characters are no longer displayed and are no longer associated with the locations of the keys 602. The set of alphabetical characters are displayed and associated with the locations of the keys 302, thereby unlocking 226 the characters associated with the locations of the keys 602.

A method includes rendering an interface area for inputting a first plurality of characters associated with a plurality of locations on a touch-sensitive display of a portable electronic device, detecting, by the touch-sensitive display, a first gesture in a first direction on the touch-sensitive display, associating a second set of characters with the plurality of locations in response to detecting the first gesture.

A computer-readable medium has computer-readable code executable by at least one processor of a portable electronic device to perform the above method.

A portable electronic device includes a touch-sensitive display configured to render an interface area for inputting a first plurality of characters associated with a plurality of locations on the touch-sensitive display and to detect a first gesture in a first direction. The portable electronic device also includes a processor configured to associate a second set of characters with the plurality of locations when the first gesture is detected.

Advantageously, the display of a set of characters and association of the set of characters with locations on a touch-sensitive display may be discontinued and a new set of characters may be displayed and associated with locations on the touch-sensitive display when a gesture is detected. Thus, the set of keys of the keyboard may be reduced as keys are not required to perform functions that are performed by the gestures. The space on the touch-sensitive display for rendering a keyboard may be reduced because fewer keys may be used, thereby providing greater space for displaying information such as the information entered using the keyboard. As a result, a greater amount of information may be displayed in a single screen on the touch-sensitive display. Thus, fewer screens may be rendered for displaying information, reducing processing time and device use time and decreasing battery power used.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
rendering an interface area for inputting a first plurality of characters associated with a plurality of locations on a touch-sensitive display of a portable electronic device;
detecting, by the touch-sensitive display, a first gesture in a first direction on the touch-sensitive display;
associating a second set of characters with the plurality of locations in response to detecting the first gesture.

2. The method according to claim 1, comprising, when a subsequent touch is detected at a location associated with one of the second set of characters, entering the one of the second set of characters.

3. The method according to claim 1, comprising determining a direction of the first gesture and wherein associating the second set of characters comprises associating based on the direction of the first gesture.

4. The method according to claim 3, wherein determining the direction of the first gesture comprises determining one of a horizontal swipe and a vertical swipe relative to an orientation of the rendered interface area.

5. The method according to claim 3, wherein determining the direction of the first gesture comprises determining one of a right direction and a left direction or determining one of an upward direction and a downward direction relative to an orientation of the rendered interface area.

6. The method according to claim 1, wherein detecting the first gesture comprises detecting one of a single swipe and a multiple-touch swipe.

7. The method according to claim 1, wherein, when the first gesture is a multiple-touch swipe, associating the second set of characters with the plurality of locations until a further gesture is detected.

8. The method according to claim 1, comprising displaying a visual indicator that the second set of characters are associated with the plurality of locations until a further gesture is detected.

9. The method according to claim 1, comprising associating the first set of characters with the plurality of locations when a second gesture is detected in a second direction on the touch-sensitive display, wherein the second direction is opposite to the first direction.

10. The method according to claim 1, wherein, when the first gesture is a single gesture, associating the first set of characters is with the plurality of locations after a touch is detected at one of the plurality of locations.

11. The method according to claim 1, wherein associating a second set of characters comprises associating capitalized versions of the first plurality of characters with the plurality of locations when the first gesture is a vertical gesture.

12. The method according to claim 1, comprising rendering the second set of characters in the interface area in response to detecting the first gesture.

13. The method according to claim 1, comprising associating a third set of characters with the plurality of locations when a second gesture is detected in the first direction on the touch-sensitive display.

14. The method according to claim 13, comprising, when a subsequent touch is detected at a location associated with one of the third set of characters, entering the one of the third set of characters.

15. The method according to claim 14, comprising rendering the third set of characters in the interface area in response to detecting the second gesture.

16. A computer-readable medium having computer-readable code executable by at least one processor of a portable electronic device to perform the method according to any one of claims 1 to 15.

17. A portable electronic device comprising:
a touch-sensitive display configured to render an interface area for inputting a first plurality of characters associated with a plurality of locations on the touch-sensitive display and to detect a first gesture in a first direction;
a processor configured to associate a second set of characters with the plurality of locations when the first gesture is detected.

## Amended claims

### Amended claims in accordance with Rule 137(2) EPC.

**1.** A method comprising:
rendering an interface area for inputting a first plurality of characters associated with a plurality of locations on a touch-sensitive display (118) of a portable electronic device (100);
detecting, by the touch-sensitive display, a first gesture in a first direction on the touch-sensitive display (118);
associating a second set of characters with the plurality of locations in response to detecting the first gesture; and
associating the first plurality of characters with the plurality of locations when a further gesture is detected in a second direction, wherein the second direction is opposite the first direction.

**2.** The method according to claim 1, comprising, when a subsequent touch is detected at a location associated with one of the second set of characters, entering the one of the second set of characters.

**3.** The method according to claim 1, comprising determining a direction of the first gesture and wherein associating the second set of characters comprises associating based on the direction of the first gesture.

**4.** The method according to claim 3, wherein determining the direction of the first gesture comprises determining one of a horizontal swipe and a vertical swipe relative to an orientation of the rendered interface area.

**5.** The method according to claim 3, wherein determining the direction of the first gesture comprises determining one of a right direction and a left direction or determining one of an upward direction and a downward direction relative to an orientation of the rendered interface area.

**6.** The method according to claim 1, wherein detecting the first gesture comprises detecting one of a single swipe and a multiple-touch swipe.

**7.** The method according to claim 1, wherein, when the first gesture is a multiple-touch swipe, associating the second set of characters with the plurality of locations until a further gesture is detected.

**8.** The method according to claim 1, comprising displaying a visual indicator that the second set of characters are associated with the plurality of locations until a further gesture is detected.

**9.** The method according to claim 1, wherein, when the first gesture is a single gesture, associating the first set of characters with the plurality of locations after a touch is detected at one of the plurality of locations.

**10.** The method according to claim 1, wherein associating a second set of characters comprises associating capitalized versions of the first plurality of characters with the plurality of locations when the first gesture is a vertical gesture.

**11.** The method according to claim 1, comprising rendering the second set of characters in the interface area in response to detecting the first gesture.

**12.** The method according to claim 1, comprising associating a third set of characters with the plurality of locations when a second gesture is detected in the first direction on the touch-sensitive display (118).

**13.** The method according to claim 12, comprising, when a subsequent touch is detected at a location associated with one of the third set of characters, entering the one of the third set of characters.

**14.** The method according to claim 13, comprising rendering the third set of characters in the interface area in response to detecting the second gesture.

**15.** A computer-readable medium having computer-readable code executable by at least one processor (102) of a portable electronic device (100) to perform the method according to any one of claims 1 to 14.

**16.** A portable electronic device (100) comprising:
a touch-sensitive display (118) configured to render an interface area for inputting a first plurality of characters associated with a plurality of locations on the touch-sensitive display (118) and to detect a first gesture in a first direction and a second gesture in a second direction, wherein the second direction is opposite to the first direction;
a processor (100) configured to associate a second set of characters with the plurality of locations when the first gesture is detected and to associate the first plurality of characters with the plurality of locations when the second gesture is detected after detecting the first gesture.
